Europäisches Patentamt

European Patent Office

Office européen des brevets

(19)

(11) Numéro de publication : **0 093 046**

**B1**

(12) **FASCICULE DE BREVET EUROPÉEN**

(45) Date de publication du fascicule du brevet :
26.03.86

(51) Int. Cl.⁴ : **G 01 M 3/28, B 08 B 9/06**

(21) Numéro de dépôt : **83400786.6**

(22) Date de dépôt : **20.04.83**

(54) **Dispositif pour le contrôle de l'étanchéité et le nettoyage de conduites, par circulation de fluide.**

(30) Priorité : **22.04.82 FR 8206934**

(43) Date de publication de la demande :
**02.11.83 Bulletin 83/44**

(45) Mention de la délivrance du brevet :
**26.03.86 Bulletin 86/13**

(84) Etats contractants désignés :
**BE DE GB IT NL SE**

(56) Documents cités :
**WO-A-81 /027 87**
**DE-A- 2 838 355**
**GB-A- 770 452**

(73) Titulaire : **Société Nationale Industrielle Aérospatiale**
**Société anonyme dite:**
**37 Bld de Montmorency**
**F-75016 Paris (FR)**

(72) Inventeur : **Vinardi, René**
**5, avenue des Romarins**
**F-44500 La Baule (FR)**

(74) Mandataire : **Bonnetat, Christian et al**
**Cabinet PROPI Conseils 23 rue de Léningrad**
**F-75008 Paris (FR)**

## Description

La présente invention concerne un dispositif pour le contrôle de l'étanchéité et le nettoyage de conduites, par circulation de fluide sous pression.

L'invention est susceptible de s'appliquer notamment, quoique non exclusivement, au contrôle et au nettoyage de conduites incorporées dans des circuits de fluides hydrauliques ou gazeux, tels que ceux disposés à bord de véhicules comme les aéronefs.

On sait qu'il est primordial, pour des raisons évidentes de sécurité, de s'assurer de l'étanchéité des circuits de circulation de fluide hydraulique ou gazeux, et notamment à bord d'un aéronef.

Il est en outre important de rincer et nettoyer les mêmes conduites, afin d'une part de débarrasser ces dernières de tout corps étranger et de tout dépôt nuisible, et d'autre part de s'assurer, qu'après l'opération d'essai, aucune quantité de fluide de contrôle restant dans ces dernières ne puisse polluer le fluide normalement véhiculé en cours d'utilisation par lesdites conduites.

De manière connue, les opérations de contrôle d'étanchéité et celles de rinçage ou dépollution sont effectuées séparément, à l'aide de dispositifs distincts. On est donc obligé d'utiliser deux installations différentes fonctionnant avec des fluides différents, l'utilisation d'un troisième fluide étant éventuellement nécessaire pour assécher et assurer une bonne finition du nettoyage.

Cette technique connue présente de nombreux inconvénients, outre celui mentionné précédemment.

En effet, la dualité d'appareils (de contrôle d'une part et de rinçage d'autre part) entraîne un coût élevé et une perte de temps importante, notamment dûs au transfert nécessaire des conduites d'une installation à l'autre. Ce transfert peut donner lieu à une pollution de l'environnement en cas d'utilisation de fluides dangereux ou même simplement salissants. En outre, l'encombrement de tels appareils connus est important.

De plus, les dispositifs de rinçage connus sont relativement coûteux et consomment une grande quantité de liquide.

Ces inconvénients sont d'autant plus gênants qu'il est souvent nécessaire d'effectuer le contrôle d'étanchéité lors de la première mise en place et ensuite régulièrement dans le cas d'un circuit disposé à bord d'un aéronef par exemple.

Par le document WO 81/02 787, on connaît déjà un dispositif pour le contrôle de l'échantéité et le nettoyage de conduites à tester, par circulation de fluide sous pression, pourvu d'un collecteur d'alimentation et d'un collecteur de retour interposés sur un premier circuit, ci-après appelé circuit principal, de circulation d'un fluide de contrôle et de rinçage et entre lesquels est susceptible d'être branchée au moins une conduite à tester, fermant ainsi ledit circuit, ledit dispositif comportant un deuxième circuit, ci-après appelé circuit secondaire, reliant une source du fluide de vidange au collecteur d'alimentation par l'intermédiaire d'au moins une vanne et le circuit principal comportant une source de fluide de contrôle et de rinçage sous forme d'un réservoir, une première et une deuxième pompe de circulation de fluide, un premier groupe de vannes disposé en amont du collecteur d'alimentation, un second groupe de vannes disposé en proximité de la fin des conduites à tester, au moins un organe de mesure de pression permettant de déterminer la pression dans les conduites à tester, le dispositif comportant en outre des moyens de commande et de contrôle à distance.

De plus, le document DE-A-2 838 355 décrit un dispositif de test de tuyaux pourvu de collecteurs d'alimentation et de retour avec des vannes en amont et en aval desdits collecteurs, d'une source de fluide sous forme de réservoir, d'une pompe de circulation de fluide et d'un organe de mesure de pression de fluide.

La présente invention concerne un dispositif pour le contrôle de l'étanchéité et le nettoyage de conduites du type décrit dans le document WO 81/02 787 susceptible d'assurer les deux opérations en un temps relativement court, de façon automatisée et évitant tout risque de pollution interne des conduites et externe de l'environnement.

A cette fin, selon l'invention, le dispositif pour le contrôle de l'étanchéité et le nettoyage de conduites, par circulation de fluide sous pression, du type décrit ci-dessus, est caractérisé en ce qu'il comporte :

un troisième circuit de fluide gazeux pourvu de distributeurs destinés à la commande du premier et du second groupes de vannes et de la seconde pompe, lesdits distributeurs étant actionnés par les moyens de commande et de contrôle à distance ; et

des moyens de régularisation de la pression d'essai en phase de mise sous haute pression des conduites à tester, constitués d'un quatrième circuit placé en parallèle sur le circuit principal entre le réservoir du fluide de contrôle et de rinçage et la sortie de la première pompe, ledit quatrième circuit comprenant une servo-valve et une vanne, toutes deux reliées aux moyens de commande et de contrôle à distance et actionnées en fonction d'informations reçues par ces derniers en provenance d'organe de mesure de pression,

en ce que le circuit principal comporte en outre :

des moyens de filtrage permettant de séparer le fluide de contrôle et de rinçage du fluide de vidange ; et

un organe de mesure de débit de fluide tel qu'un débitmètre disposé en aval du collecteur de retour,

en ce que le second groupe de vannes est placé en aval du collecteur de retour et l'organe de mesure de pression est relié au collecteur d'alimentation, et

en ce que les moyens de commande et de contrôle à distance sont aussi reliés à la première pompe, à l'organe de mesure de pression et à l'organe de mesure de débit de fluide.

Ainsi, on peut réaliser la suite des opérations suivantes dont les durées respectives sont déterminées en fonction de l'essai désiré et des caractéristiques de conduites à traiter :

a) on introduit dans les conduites un fluide de contrôle et de rinçage jusqu'à une pression d'essai déterminée ;

b) puis on mesure la variation de la pression en fonction du temps pendant une durée déterminée ;

c) on fait circuler le même fluide sous une pression inférieure et suivant un débit permettant de provoquer un régime turbulent dans les conduites de manières à effectuer le rinçage et le nettoyage de ces dernières ;

d) on vidange les conduites par introduction d'un second fluide de vidange chassant le premier fluide de contrôle et de rinçage, pendant un temps suffisant pour éviter qu'une partie du premier fluide reste dans les conduites, tandis que l'on sépare par filtrage le premier fluide du second.

Par suite, l'opération de contrôle de l'étanchéité des conduites est effectuée à la suite du rinçage de ces dernières et à l'aide du même fluide, d'où une économie de temps et de matière première sous forme de fluide. En outre, le fluide de vidange chasse le premier tout en assurant une finition du nettoyage. Le gain de temps et de matière est important à cette étape, puisque les deux fluides (de contrôle et de rinçage d'une part, et de vidange d'autre part) sont séparés par filtrage et peuvent être ainsi récupérés.

Après la mise en place des conduites et la détermination des paramètres des opérations de traitement, le fluide de contrôle et de rinçage est introduit dans les conduites et est ensuite élevé à une pression donnée, pendant un temps fixé durant lequel on mesure la perte de pression en fonction du temps grâce à l'organe de mesure de la pression, puis le même fluide est remis en circulation pour la phase de rinçage, et est enfin expulsé des conduites par le fluide de vidange, tandis que ce dernier est séparé du fluide de contrôle et de rinçage par filtration.

Toutes ces opérations sont susceptibles d'être réalisées automatiquement les unes à la suite des autres et selon une séquence fixée, grâce aux moyens de contrôle et de commande à distance.

Afin de permettre de traiter des conduites de différentes longueurs, le dispositif est monté sur un bâti supportant un plateau et au moins l'un des collecteurs (d'alimentation ou de retour) est mobile en translation sur ce plateau suivant une direction sensiblement transversale aux conduites à traiter, l'autre collecteur pouvant être fixe.

Dans le but d'assurer un remplissage rapide du circuit principal et une mise en pression élevée de manière sûre, la première pompe est du type à basse pression et grand débit, tandis que la seconde pompe, disposée en parallèle sur la première pompe et reliée directement au collecteur d'alimentation, est du type à haute pression.

De préférence, le fluide de contrôle et de rinçage est un dérivé chloré et fluoré du méthane et de l'éthane, connu sous la dénomination Fréon, sous forme liquide, et le fluide de vidange est un gaz tel que de l'air, pour des raisons de commodité et de sécurité.

Afin d'assurer une opération de vidange en deux temps, à des débits différents de fluide de vidange, le circuit secondaire du fluide de vidange comporte deux distributeurs disposés en parallèle, permettant le passage respectivement d'un débit élevé et d'un débit faible, et actionnés par les moyens de commande et de contrôle à distance.

Lors de l'opération de vidange, une filtration satisfaisante est effectuée du fait que les moyens de filtrage sont disposés entre le second groupe de vannes du collecteur de retour et la source du fluide de contrôle et de rinçage, et sont constitués d'un premier filtre susceptible d'être relié au circuit secondaire à un instant donné de la suite d'opérations, par une vanne de dérivation actionnée par les moyens de commande et de contrôle à distance, et d'un second filtre placé à l'entrée du réservoir du fluide de contrôle et de rinçage.

Dans le but de parfaire le filtrage, le dispositif comporte des moyens de régénération du fluide de contrôle et de rinçage, dont l'entrée est reliée au second filtre et la sortie au réservoir du fluide de contrôle et de rinçage, et susceptibles de permettre une distillation de ce dernier.

L'invention sera bien comprise à la lumière des dessins annexés.

La figure 1 est un schéma montrant les circuits de fluide et leurs organes associés et les moyens de commande du dispositif selon l'invention.

La figure 2 est une vue shématique en perspective du dispositif disposé sur un bâti.

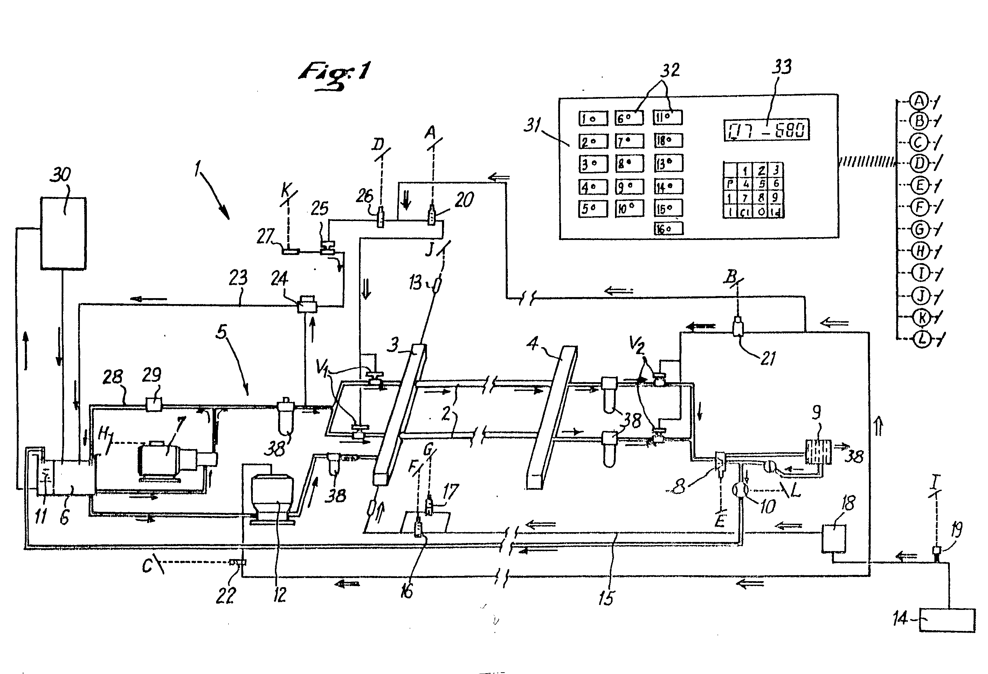

Le dispositif 1 selon l'invention, montré de façon schématique sur la figure 1, est destiné au contrôle de l'étanchéité et au nettoyage de conduites dont deux sont désignées sur la figure par la référence 2. Les conduites 2 à tester sont branchées entre un collecteur d'alimentation 3 et un collecteur de retour 4, interposés tous deux sur un circuit principal 5 de circulation de fluide, la mise en place de la ou des conduites à traiter fermant ainsi ledit circuit. On a représenté sur la figure deux conduites, mais il est bien évident que le dispositif est susceptible de traiter simultanément plusieurs conduites, disposées parallèlement les unes aux autres entre le collecteur d'alimentation 3 et le collecteur de sortie 4.

Le circuit principal 5 de circulation de fluide, dont les liaisons sont représentées en trait double sur la figure 1, comprend successivement une source de fluide de contrôle et de rinçage sous forme d'un réservoir 6, une première pompe 7 à basse pression et à débit élevé, un premier groupe de vannes V1, le collecteur d'alimentation 3, les conduites 2 à traiter, le collecteur de retour 4, un second groupe de vannes V2, une vanne de dérivation 8 qui pour une de ses deux positions place en dérivation un premier filtre 9, un débitmètre 10, et un second filtre 11 disposé à l'entrée du réservoir 6. En parallèle sur la première pompe 7 et le premier groupe de vannes V1, est disposée une seconde pompe 12 à haute pression branchée directement sur le collecteur d'alimentation 3.

Un ensemble de capteurs de pression 13 branché sur le collecteur d'alimentation 3 est susceptible de permettre la détermination de la pression du fluide à l'intérieur des conduits 2.

Le fluide de contrôle et d'essai utilisé est, dans l'exemple de réalisation décrit, un dérivé chloré et fluoré du méthane ou de l'éthane, connu sous la dénomination de Fréon.

Une source de fluide de vidange 14 tel que de l'air est reliée au collecteur d'alimentation 3 par un circuit secondaire 15 pourvu, d'une part de deux distributeurs 16 et 17 disposés en parallèle l'un sur l'autre et permettant chacun le passage respectivement d'un débit élevé et d'un débit faible, et d'autre part d'un organe de déshydratation 18 de l'air constituant le fluide de vidange. L'arrêt de la circulation de l'air est assuré par un distributeur tout ou rien 19.

L'actionnement des vannes V1, V2, et de la seconde pompe haute pression 12, est effectué grâce à des distributeurs de commande respectivement 20, 21, 22, disposés sur un troisième circuit dit de commande, où circule un fluide gazeux tel que de l'air. Le fluide étant le même dans le circuit secondaire et le troisième circuit, ce dernier est alors relié à la source de fluide de vidange 14.

En parallèle sur la première pompe 7, est disposé un quatrième circuit 23, destiné à la régulation lors de la mise en pression des conduites, et comprenant une servovalve 24, une vanne 25 commandée par un distributeur de commande 26 (disposé sur le troisième circuit de commande pneumatique) et un capteur de pression 27.

En parallèle sur la première pompe à basse pression 7 est également disposée une branche 28 de circuit, sur laquelle est placé un multiplicateur de pression 29.

Sont prévus des moyens de régénération 30 du fluide de contrôle et de rinçage, susceptibles de permettre la distillation de ce dernier par exemple, dont l'entrée est reliée directement au second filtre 11, et la sortie au réservoir 6.

Les premier et second filtres 9 et 11 sont destinés à séparer le fluide de contrôle et de rinçage du fluide de vidange, c'est-à-dire le Fréon de l'air.

Sur la figure 1, des flèches à double trait symbolisent le sens de circulation de l'air dans le circuit de vidange et le troisième circuit, dit de commande, tandis que des flèches simples indiquent le sens de circulation dans le circuit principal 5 et le quatrième circuit de régulation.

Le dispositif comporte des moyens 31 de commande et de contrôle à distance, reliés par les bornes A, B, C, D, E, F, G, H, I, J, K, L, respectivement aux points A, B, C, ..., L correspondants de la figure 1. Ainsi les bornes A, B, C et D sont reliées respectivement aux distributeurs de commande 20, 21, 22, 26, la borne E est reliée à la vanne de dérivation 8, les bornes F et G sont reliées aux distributeurs de débit faible et élevé 16, 17, la borne H à la première pompe basse pression 7, la borne I au distributeur pneumatique tout-ou-rien 19, les bornes J, K respectivement aux capteurs de pression 13, 27 et la borne L au débitmètre 10.

Sur la figure 1, les premier et second groupes de vannes V1 et V2 ne comportent chacun que deux vannes, mais il est bien entendu que chaque groupe comprend autant de vannes que de sorties et d'entrées des collecteurs d'alimentation et de retour, correspondant au nombre de conduites susceptibles d'être traitées simultanément.

Les moyens de commande et de contrôle à distance 31 comprennent des organes de prise de données 32 et de visualisation 33.

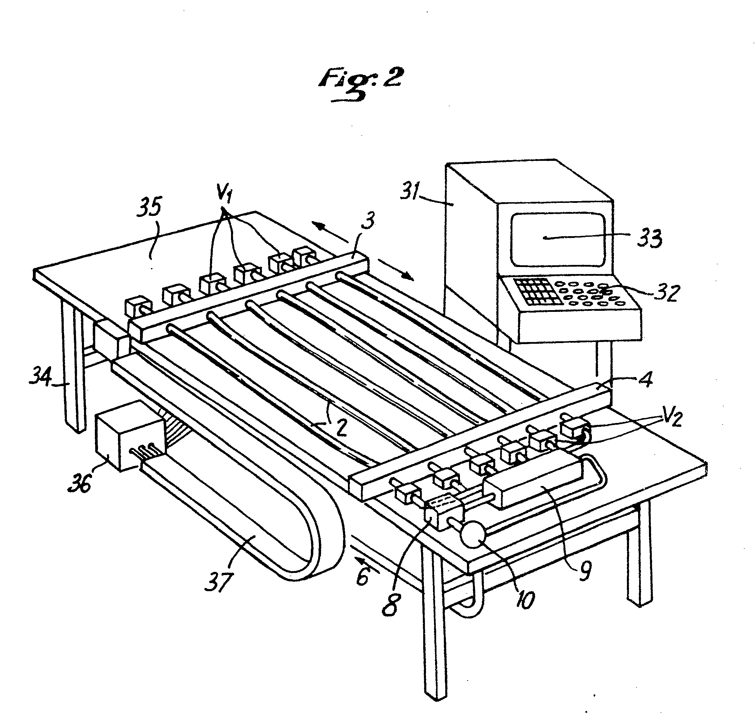

Un exemple de réalisation de l'ensemble en place est montré sur la figure 2, où l'on voit le dispositif associé à un bâti 34 pourvu d'un plateau 35 dont sont solidaires les collecteurs d'alimentation 3 et de retour 4. Ce dernier est de préférence fixe, tandis que le premier est mobile en translation sur le plateau 35, de manière à permettre de régler la distance séparant les collecteurs 3 et 4 en fonction de la longueur des conduites à tester. Sur le plateau 35 sont disposés les organes déjà mentionnés dans la description de la figure 1. Le boîtier 36 regroupe les liaisons aboutissant au premier groupe de vannes, à savoir les liaisons avec les deux pompes basse pression 7 et haute pression 12 (non représentées sur la figure 2), les capteurs de pression 13, le second circuit 15 du fluide de vidange. Le boîtier 36 et le collecteur d'alimentation 3 sont reliés par un conduit semi-rigide 37 permettant ainsi par sa déformation le déplacement du collecteur d'alimentation 3. Le nombre de conduites 2 qu'il est possible de tester simultanément peut être quelconque, d'une dizaine par exemple. La longueur de ces dernières peut atteindre 8 ou 10 mètres.

Les moyens de commande et de contrôle à distance 31 sont reliés comme décrit ci-dessus aux organes correspondants.

Le fonctionnement du dispositif selon l'invention est le suivant.

Dans un premier temps, les conduites à traiter 2 sont branchées entre le collecteur de sortie 4 et le collecteur d'alimentation 3 qui est déplacé en fonction de la longueur de ces dernières, sur le plateau 35.

Les moyens 31 de commande et de contrôle à distance sont pourvus d'organes de mémorisation, de manière qu'en introduisant (par les organes de prise de données 32) des caractéristiques des conduites 2 telles que la longueur, le diamètre, le matériau constitutif et le type de fluide véhiculé en utilisation normale, lesdits moyens 31 permettent de déterminer les conditions de l'essai telles que la pression, la durée de chaque séquence, les débits.

En position de non utilisation du dispositif, toutes les vannes V1, V2 et les distributeurs pneumatiques sont fermés, et les pompes sont à l'arrêt.

Une fois les conduites 2 branchées et les données introduites dans les moyens de commande et de contrôle à distance 31, les paramètres des opérations étant ainsi déterminés, l'opérateur, par la fermeture d'un interrupteur général, commande le démarrage desdites opérations.

La première phase consiste à remplir le circuit principal 5 de fluide de contrôle et de rinçage. Pour ce faire, les moyens de commande et de contrôle à distance 31 actionnent à l'ouverture le distributeur 19 permettant ainsi l'alimentation du troisième circuit de commande pneumatique. Les distributeurs de commande 20 et 21 sont alors ouverts afin de permettre la commande à l'ouverture des vannes V1 et V2. La vanne 8 de dérivation est en position pour laquelle elle court-circuite le premier filtre 9. La borne H est connectée, ce qui provoque la mise en marche de la pompe basse pression 7 à grand débit, la pompe haute pression 12 étant à l'arrêt. Les distributeurs 16 et 17 restant fermés, seul le Fréon circule dans le circuit principal, chassant l'air contenu initialement dans ce dernier (et notamment les conduites 2). L'air est séparé du Fréon par le second filtre 11, à l'entrée du réservoir 6. Ainsi, lorsque le débitmètre 10, relié par la borne L aux moyens de commande et de contrôle à distance 31, ne révèle plus de passage d'air, le circuit est alors considéré comme rempli de Fréon.

La phase de remplissage est terminée, et la phase de mise en pression commence.

A cette fin, les moyens de commande et de contrôle à distance 31 actionnent à la fermeture, par le distributeur de commande 21, les vannes de retour V2. Le distributeur 22 est alors ouvert, pour actionner la pompe haute pression 12 jusqu'à ce que la pression d'essai voulue soit atteinte (de l'ordre de plusieurs centaines de bars par exemple). Celle-ci est détectée par l'ensemble capteurs de pression 13 relié par la borne J aux moyens de commande et de contrôle à distance 31. Une fois la pression atteinte, celle-ci est régulée par les moyens de régulation 23, associés au capteur de pression 27, pendant le temps nécessaire du fait du phénomène de tassement.

La phase de contrôle de l'étanchéité des conduits peut alors débuter. Les vannes V1 sont fermées à leur tour et les deux pompes sont arrêtées. Les capteurs de pression 13 détectent toute variation $\Delta P$ de pression P dans un temps T donné. L'écart de variation $\Delta P/\Delta t$ par rapport à une valeur fixée à l'avance révèle la présence d'une fuite, et les moyens de contrôle 31 à distance permettent de visualiser cette variation par des organes d'alarme et/ou de signalisation 33.

Dans le cas où aucune fuite n'est révélée, la phase de contrôle satisfaisante est terminée, et commence la phase de rinçage des conduites 2, précédée d'une phase de décharge où les vannes de retour V2 sont ouvertes, provoquant la chute de la pression.

Les vannes V1 sont actionnées de nouveau à l'ouverture, la pompe basse pression 7 et à grand débit est remise en marche et le circuit de régulation 23 est mis hors service par fermeture des vannes 24 et 25 ; toutes ces manœuvres sont effectuées par les moyens de commande et de contrôle à distance 31. La circulation du Fréon dans le circuit principal est réalisée à des vitesses suffisantes pour créer un régime turbulent, de manière à effectuer un nettoyage et rinçage approprié des conduites 2. Le débit relativement élevé peut également être soumis à des variations cycliques. La durée de la phase de rinçage et nettoyage est fixée à l'avance en fonction des caractéristiques intrinsèques des conduites et de leurs conditions d'utilisation.

Une fois que le traitement de contrôle et de rinçage, effectué à l'aide du même fluide, est terminé, la phase de vidange a lieu. La pompe basse pression 7 est arrêtée, le distributeur 17 d'air à faible débit est ouvert afin de permettre à l'air introduit de chasser le Fréon contenu dans les conduites. Ce dernier est refoulé vers le réservoir 6. Au fur et à mesure du déroulement de l'opération de vidange, l'air remplace le Fréon dans les conduites et dans la partie aval du circuit principal, entre le collecteur d'alimentation 3 et le réservoir 6 de Fréon. Il est donc nécessaire de séparer le Fréon de l'air. Pour ce faire, la vanne de dérivation 8 est actionnée dans sa seconde position où le premier filtre 9 est mis en circuit. Ce premier filte 9 effectue une première séparation du Fréon et de l'air, ce dernier étant rejeté à l'atmosphère en 38. Un second filtrage est assuré par le second filtre 11, plus fin que le premier, situé à l'entrée du réservoir 6. La partie du fluide rejetée par ce filtre 11 est soumise à distillation par les moyens de régénération 30. On obtient ainsi une concentration quasi absolue de Fréon dans le réservoir 6.

La phase finale de séchage est assurée par circulation d'air, séché par l'organe de déshydratation 18, à grand débit, par fermeture du distributeur 17 tandis que le distributeur 16 à grand débit est ouvert.

A la fin de l'étape de séchage, le cycle est terminé et les conduites ainsi testées, rincées et séchées, sont débranchées, et l'on peut passer à un cycle suivant en replaçant d'autres conduites entre les collecteurs d'alimentation et de retour du circuit principal.

Il a été représenté sur la figure 2 un exemple de réalisation du dispositif monté sur un bâti fixe. On peut réaliser le dispositif sur une structure mobile, telle qu'un véhicule terrestre par exemple. Cette disposition permet d'effectuer le contrôle et le rinçage des conduites disposées dans des circuits de circulation de fluide à bord d'aéronefs, ou de bateau par exemple, en s'approchant de ce dernier et évitant ainsi le transfert des conduites, source de perte de temps.

Des filtres 38 sont avantageusement prévus le long des circuits de fluide.

## Revendications

1. Dispositif pour le contrôle de l'étanchéité et le nettoyage de conduites, à tester par circulation de fluide sous pression, pourvu d'un collecteur d'alimentation (3) et d'un collecteur de retour (4) interposés sur un premier circuit, ci-après appelé circuit principal (5), de circulation d'un fluide de contrôle et de rinçage et entre lesquels est susceptible d'être branchée au moins une conduite (2) à tester, fermant ainsi ledit circuit, ledit dispositif comportant un deuxième circuit, ci-après appelé circuit secondaire (15), reliant une source de fluide de vidange (14) au collecteur d'alimentation (3) par l'intermédiaire d'au moins une vanne (16, 17), et le circuit principal comportant une source du fluide de contrôle et de rinçage sous forme d'un réservoir (6), des première (7) et deuxième (12) pompes de circulation de fluide, un premier groupe de vannes ($V_1$) disposé en amont du collecteur d'alimentation (3), un second groupe de vannes ($V_2$) en proximité de la fin des conduites à tester, au moins un organe (13) de mesure de pression permettant de déterminer la pression du fluide dans les conduites (2) à tester, le dispositif comportant en outre des moyens (31) de commande et de contrôle à distance, caractérisé en ce qu'il comporte :

un troisième circuit de fluide gazeux pourvu de distributeurs (20, 21, 22) destinés à la commande du premier ($V_1$) et du second ($V_2$) groupes de vannes et de la seconde pompe (12), lesdits distributeurs étant actionnés par les moyens (31) de commande et de contrôle à distance ; et

des moyens de régulation de la pression d'essai en phase de mise sous haute pression des conduites à tester (2), constitués d'un quatrième circuit (23) placé en parallèle sur le circuit principal (5) entre le réservoir (6) du fluide de contrôle et de rinçage et la sortie de la première pompe (7), ledit quatrième circuit comprenant une servo-valve (25) et une vanne (24), toutes deux reliées aux moyens (31) de commande et de contrôle à distance et actionnées en fonction d'informations reçues par ces derniers en provenance de l'organe (13) de mesure de pression, en ce que le circuit principal (5) comporte en outre :

des moyens de filtrage (9, 11) permettant de séparer le fluide de contrôle et de rinçage du fluide de vidange ; et

un organe de mesure de débit de fluide tel qu'un débitmètre (10) disposé en aval du collecteur de retour (4),

en ce que le second groupe de vannes ($V_2$) est placé en aval du collecteur de retour (4) et l'organe (13) de mesure de pression est relié au collecteur d'alimentation (3), et

en ce que les moyens (31) de commande et de contrôle à distance sont aussi reliés à la première pompe (7), à l'organe (13) de mesure de pression et à l'organe de mesure (10) de débit de fluide.

2. Dispositif selon la revendication 1, caractérisé en ce que le dispositif est monté sur un bâti (34) supportant un plateau (35) et en ce que au moins l'un des collecteurs, d'alimentation (3) ou de retour (4), est mobile en translation sur ce plateau suivant une direction sensiblement transversale aux conduites à traiter, l'autre collecteur pouvant être fixe, afin de permettre le réglage de la distance séparant lesdits collecteurs.

3. Dispositif selon l'une des revendications 1 ou 2, caractérisé en ce que la première pompe (7) est du type à basse pression et grand débit, tandis que la seconde pompe (12), disposée en parallèle sur la première pompe et reliée directement au collecteur d'alimentation (3), est du type à haute pression.

4. Dispositif selon l'une des revendications 1 à 3, caractérisé en ce que le fluide de contrôle et de rinçage est un dérivé chloré et fluoré du méthane et de l'éthane, connu sous la dénomination Fréon, sous forme liquide, et en ce que le fluide de vidange est un gaz tel que l'air.

5. Dispositif selon l'une des revendications 1 à 4, caractérisé en ce que le circuit secondaire (15) du fluide de vidange comporte deux distributeurs disposés en parallèle, permettant le passage respectivement d'un débit élevé et d'un débit faible, et actionnés par les moyens (31) de commande et de contrôle à distance.

6. Dispositif selon l'une des revendications 1 à 5, caractérisé en ce que les moyens de filtrage (9, 11) sont disposés entre le second groupe de vannes (V2) et la source du fluide de contrôle et de rinçage (6), et sont constitués d'un premier filtre (9) susceptible d'être relié au circuit secondaire à un instant donné, par une vanne de dérivation (8) actionnée par les moyens (31) de commande et de contrôle à distance, et d'un second filtre (11) placé à l'entrée du réservoir (6) du fluide de contrôle et de rinçage.

7. Dispositif selon l'une des revendications 1 à 6, caractérisé en ce qu'il comporte des moyens de régénération (30) du fluide de contrôle et de rinçage, dont l'entrée est reliée au second filtre (11) et la sortie au réservoir (6) du fluide de contrôle et de rinçage, et susceptibles de permettre une distillation de ce dernier.

## Claims

1. Device for monitoring the tightness and cleaning of conduits to be tested, by circulation of fluid under pressure, provided with a supply manifold (3) and a return manifold (4) interposed on a first circuit, hereinafter called principal circuit (5), for circulation of a monitoring and rinsing fluid and between which may be branched at least one conduit (2) to be tested, thus closing said circuit, said device comprising a second circuit, hereinafter called secondary circuit (15), connecting a source of drainage fluid (14) to the supply manifold (3) via at least one valve (16, 17), and the principal circuit comprising a source of the monitoring and rinsing fluid in the form of a reservoir (6), first (7) and second (12) fluid circulation pumps, a first group of valves ($V_1$) disposed upstream of the supply manifold (3), a second group of valves ($V_2$) in the vicinity of the end of the conduits to be tested, at least one member (13) for measuring pressure making it possible to determine the pressure of the fluid in the conduits (2) to be tested, the device further comprising means (31) for remote-control and monitoring, characterized in that it comprises :

a third gaseous fluid circuit provided with distributors (20, 21, 22) intended to control the first ($V_1$) and second ($V_2$) groups of valves and the second pump (12), said distributors being actuated by the remote-control and monitoring means (31) ; and

means for regulating the test pressure in phase of placing the conduits (2) to be tested under high pressure, constituted by a fourth circuit (23) placed in parallel on the principal circuit (5) between the reservoir (6) of the monitoring and rinsing fluid and the outlet of the first pump (7), said fourth circuit comprising a servo-valve (25) and a valve (24), both connected to the remote-control and monitoring means (31) and actuated as a function of information received by these latter coming from the pressure measuring member (13), in that the principal circuit (5) further comprises :

filtering means (9, 11) making it possible to separate the monitoring and rinsing fluid from the emptying fluid ; and

a member for measuring the flow of fluid such as a flowmeter (10) disposed downstream of the return manifold (4),

in that the second group of valve ($V_2$) is placed downstream of the return manifold (4) and the pressure-measuring member (13) is connected to the supply manifold (3), and

in that the remote-control and monitoring means (31) are also connected to the first pump (7), to the pressure measuring member (13) and to the member (10) for measuring the flow of fluid.

2. Device according to Claim 1, characterized in that the device is mounted on a frame (84) supporting a plate (35) and in that at least one of the supply (3) or return (4) manifolds is mobile in translation on this plate in a direction substantially transverse to the conduits to be treated, the other manifold being adapted to be fixed, in order to allow the adjustment of the distance separating said manifolds.

3. Device according to one of Claims 1 or 2, characterized in that the first pump (7) is of the low-pressure and high-output type, whilst the second pump (12), disposed in parallel on the first pump and connected directly to the supply manifold (3), is of the high-pressure type.

4. Device according to one of Claims 1 to 3, characterized in that the monitoring and rinsing fluid is a chlorinated and fluorinated derivative of methane and ethane, known under the name Freon, in liquid form, and in that the emptying fluid is a gas such as air.

5. Device according to one of Claims 1 to 4, characterized in that the secondary circuit (15) of the emptying fluid comprises two distributors disposed in parallel, allowing the passage respectively of a high output and of a low output, and actuated by the remote-control and monitoring means (31).

6. Device according to one of Claims 1 to 5, characterized in that the filtering means (9, 11) are disposed between the second group of valves (V2) and the source of the monitoring and rinsing fluid (6), and are constituted by a first filter (9) capable of being connected to the secondary circuit at a given instant, by a shunt valve (8) actuated by the remote-control and monitoring means (31), and by a second filter (11) placed at the inlet of the reservoir (6) of the monitoring and rinsing fluid.

7. Device according to one of Claims 1 to 6, characterized in that it comprises means (30) for regeneration of the monitoring and rinsing fluid, of which the inlet is connected to the second filter (11) and the outlet to the reservoir (6) of the monitoring and rinsing fluid, and capable of allowing a distillation of the latter.

**Patentansprüche**

1. Vorrichtung zur Dichtheits- und Reinigungskontrolle von zu überprüfenden Leitungen durch den Umlauf einer Druckflüssigkeit, bestehend aus einer Hauptspeiseleitung (3) und einem zwischen einem ersten hiernach Hauptkreis (5) genannten Schaltkreis geschalteten Rücklaufsammler (4), wobei dieser Kreis eine Kontroll- und Spülflüssigkeit umlaufen läßt und zumindest eine zu prüfende Leitung (2) zwischengeschaltet werden kann, um so den Kreis zu schließen, und bestehend aus einem zweiten, hiernach Sekundärkreis genannten Kreis (15), durch den eine Auslaufflüssigkeitsquelle (14) über zumindest einen Schieber (16, 17) an der Hauptspeiseleitung (3) liegt, und der Hauptkreis eine Kontroll- und Spülflüssigkeitsquelle in Form eines Reservoirs (6), erste und zweite Flüssigkeitsumwälzpumpen (7 bzw. 12), eine erste Gruppe von der Hauptspeiseleitung (3) vorgeschalteten Schieber ($V_1$), eine zweite Gruppe in der Nähe der zu prüfenden Leitungsenden geschaltete Schieber ($V_2$) und zumindest ein Druckmeßteil (13) in den zu prüfenden Leitungen (2) aufweist, sowie bestehend aus Fernsteuerungs- und -kontrollmittel (31), gekennzeichnet durch :

einen für gasförmige Strömungsmittel geeigneten dritten Kreis, der mit Verteilern (20, 21, 22) versehen ist, die zum Steuern der ersten und der zweiten Gruppe der Schieber ($V_1$, $V_2$) sowie der zweiten Pumpe (12) dienen und die von den Fernsteuerungs- und -kontrollmitteln (31) betätigt werden, und durch

Mittel zum Regeln des Prüfdrucks richtigphasig mit der Hochdruckbeaufschlagung der zu prüfenden Leitungen (2), wobei diese Mittel einen vierten Kreis (23) aufweisen, der zum Hauptkreis (5) zwischen dem Reservoir (6) der Kontroll- und Spülflüssigkeit und dem Ausgang der ersten Pumpe (7) parallel liegt und der ein Servoventil (25) und einen Schieber (24) aufweist, die beide an den Fernsteuerungs- und -kontrollmitteln (31) liegen und in Abhängigkeit der von den letzteren empfangenen, vom Druckmeßteil (13) stammenden Daten betätigt werden, und dadurch

daß der Hauptkreis (5) darüber hinaus eine Einrichtung (9, 11) zum Filtern, durch die Kontroll- und Spülflüssigkeit von der Auslaufflüssigkeit getrennt wird, und ein Meßteil zum Bestimmen des Strömungsmitteldurchsatzes wie ein Durchflußmesser (10), der dem Rücklaufsammler (4) nachgeschaltet ist, aufweist,

daß die zweite Gruppe der Schieber ($V_2$) dem Rücklaufsammler (4) nachgeschaltet ist und das Druckmeßteil (13) an der Hauptspeiseleitung (3) liegt, und

daß die Mittel (31) zur Fernsteuerung und -Kontrolle ebenfalls an der ersten Pumpe (7), dem Druckmeßteil (13) sowie dem Messer des Strömungsmitteldurchflußes liegen.

2. Vorrichtung nach Anspruch 1, dadurch gekennzeichnet, daß die Vorrichtung auf einem Gestell (34) angeordnet ist, das eine Platte (35) trägt, daß zumindest entweder die Hauptspeiseleitung (3) oder der Rücklaufsammler (4) auf der Platte in einer Richtung, die allgemein zu den zu behandelnden Leitungen transversal verläuft, parallelverschiebbar ist, wobei die jeweilig andere Einheit ortsfest sein kann, so daß der die Einheiten (3, 4) trennende Abstand eingestellt werden kann.

3. Vorrichtung nach einem der Ansprüche 1 oder 2, dadurch gekennzeichnet, daß als erste Pumpe (7) eine Niederdruckpumpe mit großem Durchsatz und als zweite Pumpe (12), die zur ersten Pumpe parallel liegt und unmittelbar an die Hauptspeiseleitung (3) angeschlossen ist, dagegen eine Hochdruckpumpe verwendet wird.

4. Vorrichtung nach einem der Ansprüche 1 bis 3, dadurch gekennzeichnet, daß als Strömungsmittel für die Kontrolle und Spülung ein chloriertes oder fluoriertes Derivat von Methan oder Äthan in flüssiger Form verwendet wird, das der Technik als Freon bekannt ist, und als Auslaufflüssigkeit Gas oder Luft als Strömungsmittel verwendet wird.

5. Vorrichtung nach einem der Ansprüche 1 bis 4, dadurch gekennzeichnet, daß der Sekundärkreis (15) des Auslaufströmungsmittels zwei parallel angeordnete Verteiler aufweist, durch die der jeweilig erhöhte oder geminderte Durchsatz bewirkt wird und die von den Fernsteuerungs- und -kontrollmitteln (31) betätigt werden.

6. Vorrichtung nach einem der Ansprüche 1 bis 5, dadurch gekennzeichnet, daß die Einrichtung zum Filtern (9, 11) zwischen der zweiten Schiebergruppe ($V_2$) und der Quelle des Strömungsmittels für die Kontrolle und Spülung (6) angeordnet ist und aus einem ersten Filter (9), das zu einem gegebenen Zeitpunkt an den Sekundärkreis über einen von den Fernsteuerungs- und -kontrollmitteln (31) getätigten Umleitungsschieber (8) angeschlossen werden kann, und einem zweiten Filter (11) besteht, das am Eingang des Reservoirs (6) des Strömungsmittels für Kontrolle und Spülung eingesetzt ist.

7. Vorrichtung nach einem der Ansprüche 1 bis 6, dadurch gekennzeichnet, daß eine Einrichtung zur Regenerierung (30) des Strömungsmittels für Kontrolle und Spülung vorgesehen ist, deren Eingang am zweiten Filter (11) und deren Ausgang am Reservoir (6) des Strömungsmittels für Kontrolle und Spülung liegt, wobei durch sie eine Destillation des Strömungsmittels ermöglicht wird.

Fig. 1

Fig. 2